# EUROPÄISCHE PATENTSCHRIFT

(11) **EP 3 005 645 B1**
(45) Veröffentlichungstag und Bekanntmachung des Hinweises auf die Patenterteilung: **14.02.2018**
(21) Anmeldenummer: 14729275.9
(22) Anmeldetag: 04.06.2014
(51) Int. Cl.: H04L 29/06

(54) **VERFAHREN ZUR SICHERUNG VON TELEKOMMUNIKATIONSVERKEHRSDATEN**
METHOD FOR SECURING DATA OF TELECOMMUNICATIONSTRAFFIC
PROCEDE POUR SECURISER LES DONNEES DE CIRCULATION EN TELECOMMUNICATION

(30) Priorität: 04.06.2013 DE 102013105740
(43) Veröffentlichungstag der Anmeldung: 13.04.2016
(73) Patentinhaber: Uniscon universal identity control GmbH, 80992 München (DE)
(72) Erfinder: JÄGER, Hubert, 82049 Pullach (DE); MONITZER, Arnold, 85229 Markt Indersdorf (DE); GEORGIEV, Vesko Mitkov, Seattle, WA 98109 (US); KARATZAS, Christos, PO 19013, Athen (GR); MODI, Jaymin, 81737 München (DE); NGUYEN, Dau Khiem, 80687 München (DE); SPILLMANN, Dieter, Campbell, CA 95008 (US)
(74) Vertreter: 2s-ip Schramm Schneider Bertagnoll Patent- und Rechtsanwälte Part mbB
(86) Internationale Anmeldenummer: PCT/EP2014/061569
(87) Internationale Veröffentlichungsnummer: WO 2014/195353

(56) Entgegenhaltungen:
- EP-A1- 2 523 421
- US-A1- 2005 076 089
- US-A1- 2006 023 727

## Beschreibung

### Gebiet der Erfindung

Die Erfindung betrifft ein System und ein Verfahren zur Sicherung von Telekommunikationsverkehrsdaten, die bei einer Nutzung eines Telekommunikationsdienstes von einer Anzahl von Teilnehmern des Telekommunikationsdienstes bei dem Telekommunikationsdienstleister des Telekommunikationsdienstes anfallen.

### Hintergrund der Erfindung

In einigen Ländern, etwa der Bundesrepublik Deutschland, werden bei einer Vorratsdatenspeicherung personenbeziehbare bzw. personenbezogene Daten durch oder für sämtliche Stellen gespeichert, ohne dass die Daten aktuell benötigt werden. Zweck einer solchen Vorratsdatenspeicherung soll eine verbesserte Möglichkeit der Verhütung und Verfolgung von Straftaten sein. Hierzu müssen die Daten über einen bestimmten Zeitraum gespeichert werden, damit sie beispielsweise für Strafverfolgungszwecke zur Verfügung stehen. Üblicherweise wird die Vorratsdatenspeicherung von dem Anbieter bzw. Dienstleister eines Telekommunikationsdienstes durchgeführt.

Um zu gewährleisten, dass der Anbieter des Telekommunikationsdienstes keine unberechtigten Zugriffe auf die Verkehrsdaten seiner Kunden hat, um etwa Persönlichkeitsprofile zu erstellen, ist es bekannt, die Verbindungsdaten in einer gesicherten Umgebung zu speichern und vor der Speicherung zu verschlüsseln. Die gesicherte Umgebung wird auch als versiegelte Infrastruktur bezeichnet. Die gesicherte Umgebung bzw. versiegelte Infrastruktur verhindert, dass weder der Betreiber der Infrastruktur noch der den Telekommunikationsdienst anbietende Telekommunikationsdienstleister oder ein sonstiger Dritter auf diese Daten zugreifen kann. Weiter ist es bekannt, die Telekommunikationsdaten bzw. Verbindungsdaten mit zwei unterschiedlichen Verschlüsselungsschlüsseln zu verschlüsseln, wobei einer der beiden Schlüssel bei einer vertrauenswürdigen Instanz, etwa einem Notar hinterlegt wird. Dadurch wird ein unberechtigter Zugriff auf die Verbindungs- bzw. Verkehrsdaten effizient verhindert, denn für den Zugriff ist in jedem Fall der bei der vertrauenswürdigen Instanz hinterlegte Schlüssel notwendig.

Um auch die zwischen den Teilnehmern eines Telekommunikationsdienstes ausgetauschten Daten, etwa elektronische Nachrichten oder elektronische Dokumente, vor einem unberechtigten Zugriff des Telekommunikationsdienstleisters oder sonstiger Dritter zu verhindern, ist es bekannt, die von einem Teilnehmer empfangenen Daten ebenfalls zu verschlüsseln, sodass nur jene Teilnehmer Zugriff auf die Daten haben, für die die Daten bestimmt sind. Sowohl die Verschlüsselungs- als auch die Entschlüsselungsschlüssel können in der vorstehend genannten gesicherten Umgebung gespeichert werden. Damit ist gewährleistet, dass weder der Telekommunikationsdienstleister noch sonstige Dritte weder auf die Verkehrsdaten noch auf die Nutzdaten Zugriff haben. Ein unberechtigtes Auswerten beispielsweise der Verkehrsdaten im Rahmen einer Rasterfahndung wird dadurch effektiv verhindert, sofern beispielsweise keine richterliche Anordnung vorliegt, die die Verwendung des bei einer vertrauenswürdigen Instanz, etwa einem Notar hinterlegten Schlüssel erlaubt.

Dieses aus dem Stand der Technik bekannte Verfahren zur Sicherung von Verkehrsdaten und Nutzdaten hat allerdings den Nachteil, dass, selbst wenn die Teilnehmer eines Telekommunikationsdienstes über gesicherte, etwa verschlüsselte Kommunikationsverbindungen Daten untereinander austauschen, der Telekommunikationsdienstleister die Möglichkeit hat, anhand des Datenverkehrs die Information abzuleiten, wer mit wem kommuniziert. Diese Information kann der Telekommunikationsdienstleister selbst dann erhalten, wenn die Kommunikation zwischen den Teilnehmern und dem Telekommunikationsdienst verschlüsselt erfolgt, weil für die Information, wer mit wem kommuniziert, der Inhalt der zwischen den Teilnehmern ausgetauschten Daten nicht benötigt wird.

Dieses Problem tritt insbesondere dann auf, wenn ein Telekommunikationsdienst nach dem Erhalt einer Nachricht, etwa eines elektronischen Dokuments, von einem Teilnehmer jenen Teilnehmer, für den die Nachricht bestimmt ist, mit Hilfe einer weiteren Nachricht das Vorliegen einer für ihn bestimmten Nachricht signalisiert. Weil der Datenaustausch zwischen den Teilnehmern und dem Telekommunikationsdienst an sich für den Telekommunikationsdienstleister immer "sichtbar" ist, kann der Telekommunikationsdienstleister aus der Tatsache, dass eine Nachricht für einen bestimmten Teilnehmer von einem Teilnehmer hinterlegt worden ist und der Teilnehmer, für den die Nachricht bestimmt ist, über das Vorliegen der Nachricht signalisiert wird, die Information erhalten, dass die beiden Teilnehmer miteinander kommunizieren, selbst wenn der Datenaustausch an sich verschlüsselt erfolgt und wenn der Teilnehmer, für den die Nachricht bestimmt ist, diese von dem Telekommunikationsdienst nicht anfordert.

Weil auch die Information, wer mit wem kommuniziert, zu den Telekommunikationsverkehrsdaten zählt, die für eine Rasterfahndung oder zur Erstellung von Persönlichkeitsprofilen herangezogen werden kann, sind die aus dem Stand der Technik bekannten Verfahren zur Vorratsdatenspeicherung trotz hoher Sicherheitsstandards nicht ausreichend geschützt bzw. gesichert, um die Möglichkeit einer unberechtigten Auswertung von Telekommunikationsverkehrsdaten effektiv zu verhindern.

Aus der US 2005/0076089 A1 ist ein Verfahren bekannt, bei dem es möglich sein soll, dass ein oder mehrere Sender anonym Nachrichten an einen oder mehrere Empfänger senden können. Die vom Sender gesendete Nachricht wird von einem Dritten empfangen, der die Absenderinformationen aus der Nachricht entfernt, und anschließend von dem Dritten an den Empfänger weitergeleitet wird. Um das Überwachen des Nachrichtenverkehrs zu erschweren, soll es vorgesehen sein, die empfangene Nachricht beim Dritten für einen bestimmten Zeitraum zu speichern und erst nach Ablauf dieses Zeitraumes zusammen mit weiteren Nachrichten, die innerhalb dieses Zeitraumes beim Dritten eingegangen sind, an den Empfänger weiterzuleiten, wobei alle Nachrichten in einer einzigen Nachricht weitergeleitet werden und die Reihenfolge der Nachrichten zufällig gewählt wird.

Aus der US 2006/0023727 A1 beschäftigt sich mit einem Verfahren eine Nachricht durch ein Netzwerk zu routen, wobei sichergestellt sein soll, dass der Absender der Nachricht anonym bleibt. Hierzu werden beim Erzeugen der Nachricht alle Informationen entfernt, die es einem Knoten in dem Netzwerk ermöglichen könnten jenen Knoten zu identifizieren, in dem die Nachricht erzeugt wurde. Ferner wird ein sogenanntes TTL-Feld der Nachricht modifiziert, um zu verhindern, dass ein Knoten in dem Netzwerk anhand der Information in dem TTL-Feld den Knoten, in dem die Nachricht erzeugt wurde, ermitteln kann.

### Aufgabe der Erfindung

Aufgabe der Erfindung ist es daher, ein System und ein Verfahren zur Sicherung von Telekommunikationsverkehrsdaten, die bei einer Nutzung zumindest eines Telekommunikationsdienstes von einer Anzahl von Teilnehmern bei dem Telekommunikationsdienstleister des Telekommunikationsdienstes anfallen, bereitzustellen, welche einen unberechtigten Zugriff bzw. Missbrauch der Telekommunikationsverkehrsdaten effektiv und effizient verhindern.

### Erfindungsgemäße Lösung

Diese Aufgabe wird erfindungsgemäß durch ein Verfahren und ein System zur Sicherung von Telekommunikationsverkehrsdaten nach den unabhängigen Ansprüchen gelöst. Vorteilhafte Ausgestaltungen und Weiterbildungen der Erfindung sind in den jeweiligen abhängigen Ansprüchen angegeben.

Bereitgestellt wird demnach ein Verfahren zur Sicherung von Telekommunikationsverkehrsdaten, die bei einer Nutzung zumindest eines Telekommunikationsdienstes von einer Anzahl von Teilnehmern bei dem Telekommunikationsdienstleister des Telekommunikationsdienstes anfallen, wobei der Telekommunikationsdienst eine Nachricht zumindest eines ersten Teilnehmers des Telekommunikationsdienstes entgegennimmt, die für zumindest einen zweiten Teilnehmer des Telekommunikationsdienstes bestimmt ist, und wobei der Telekommunikationsdienst in Reaktion auf die Entgegennahme der Nachricht eine Benachrichtigung an den zumindest einen zweiten Teilnehmer sendet, wobei zwischen der Entgegennahme der Nachricht und dem Senden der Benachrichtigung ein vorbestimmter Zeitversatz vorgesehen wird, wobei der Zeitversatz zwischen der Entgegennahme der Nachricht und dem Senden der Benachrichtigung in Abhängigkeit vom Datenverkehr pro Zeiteinheit zwischen den Teilnehmern und dem Telekommunikationsdienst gewählt wird, wobei der Zeitversatz zufällig aus einem Zeitversatzintervall ausgewählt wird, und wobei die Intervallgrenzen des Zeitversatzintervalls in Abhängigkeit vom Datenverkehr pro Zeiteinheit zwischen den Teilnehmern und dem Telekommunikationsdienst gewählt werden.

Damit kann der Zeitversatz bzw. das Senden der Benachrichtigungen an die Auslastung des Telekommunikationsdienstes vorzugsweise dynamisch angepasst werden.

Ein Ermitteln des aktuellen Zeitversatzes mit Hilfe einer zeitlichen Analyse des eingehenden und ausgehenden Datenverkehrs kann so effektiv verhindert werden, was dem Telekommunikationsdienstleister ermöglichen würde, bei Kenntnis des aktuellen Zeitversatzes eine zeitliche Korrelation zwischen den entgegengenommenen Nachrichten und den gesendeten Benachrichtigungen herzustellen, aus denen der Telekommunikationsdienstleister die Information ableiten könnte, wer mit wem kommuniziert.

Aufgrund der Abhängigkeit der Intervallgrenzen des Zeitversatzintervalls vom Datenverkehr pro Zeiteinheit zwischen den Teilnehmern und dem Telekommunikationsdienst wird nicht nur der Zeitversatz zufällig aus dem Zeitversatzintervall ausgewählt, sondern auch das Zeitversatzintervall selbst an den Datenverkehr angepasst, sodass für den Telekommunikationsdienstleister oder einem unberechtigten Dritten das Ermitteln des aktuellen Zeitversatzes noch weiter erschwert wird

Der Zeitversatz kann für eine vorbestimmte Anzahl von zu sendenden Benachrichtigungen zufällig aus einem Zeitversatzintervall ausgewählt werden. Alternativ kann der Zeitversatz auch für jede zu sendende Benachrichtigung zufällig aus einem Zeitversatzintervall ausgewählt werden.

Als besonders vorteilhaft hat sich herausgestellt, wenn der Zeitversatz bei einem hohen Datenverkehr pro Zeiteinheit kleiner ist als bei einem geringen Datenverkehr pro Zeiteinheit.

Weil bei einem hohen Datenverkehr pro Zeiteinheit in der Regel von dem Telekommunikationsdienst Nachrichten von einer großen Anzahl von Teilnehmern entgegengenommen werden und damit auch Benachrichtigungen an eine große Anzahl von Teilnehmern versendet werden, kann der Zeitversatz verkleinert werden ohne dem Telekommunikationsdienstleister die Möglichkeit zu bieten, anhand einer zeitlichen Korrelation zwischen der Entgegennahme der Nachrichten und dem Senden der Benachrichtigungen die Information abzuleiten, wer mit wem kommuniziert. Bei einem geringen Datenverkehr pro Zeiteinheit nimmt der Telekommunikationsdienst in der Regel nur Nachrichten von einer geringen Anzahl von Teilnehmern entgegen und muss daher auch nur an eine geringe Anzahl von Teilnehmern eine entsprechende Benachrichtigung senden. Um auch für diesen Fall eine zeitliche Korrelation zwischen der Entgegennahme der Nachrichten und dem Senden der Benachrichtigungen zu verhindern, wird der Zeitversatz entsprechend vergrößert.

Vorteilhaft ist es, wenn der Telekommunikationsdienst in einer gesicherten Umgebung (versiegelte Infrastruktur) ausgeführt wird.

Dadurch, dass der Telekommunikationsdienst in einer gesicherte Umgebung bzw. versiegelten Infrastruktur ausgeführt wird, wird gewährleistet, dass der Telekommunikationsdienstleister des Telekommunikationsdienstes keinen Zugriff auf die beim Telekommunikationsdienst anfallenden Daten hat. Um auch aus dem Datenverkehr zwischen den Teilnehmern und dem Telekommunikationsdienst keinerlei Informationen ableiten zu können, aus denen ermittelt werden kann, wer mit wem kommuniziert, ist der Zeitversatz zwischen der Entgegennahme einer Nachricht und dem Senden der Benachrichtigung vorgesehen. Dadurch wird verhindert, dass anhand einer zeitlichen Korrelation zwischen der Entgegennahme einer Nachricht und dem Senden einer Benachrichtigung ermittelt werden kann, wer mit wem kommuniziert. Aufgrund des Zeitversatzes wird verhindert, dass eine Benachrichtigung einer entgegengenommenen Nachricht zugeordnet werden kann, sodass auch der Absender einer Nachricht nicht dem Empfänger der Benachrichtigung zuordenbar ist.

In einer vorteilhaften Ausgestaltung der Erfindung umfasst der Datenverkehr pro Zeiteinheit die Anzahl der entgegengenommenen Nachrichten pro Zeiteinheit. Damit wird verhindert, dass bei einer geringen Anzahl von entgegengenommenen Nachrichten pro Zeiteinheit, die beispielsweise aufgrund von sehr großen Nachrichten einen hohen Datenverkehr verursachen, der Zeitversatz zu gering ausgewählt wird, was aufgrund der geringen Anzahl von entgegengenommenen Nachrichten und versendeten Benachrichtigungen eine zeitliche Korrelation zwischen den entgegengenommenen Nachrichten und den gesendeten Benachrichtigungen ermöglichen würde.

In einer Ausgestaltung der Erfindung kann der Telekommunikationsdienst einen Benachrichtigungsdienst umfassen, der die Benachrichtigung an den zumindest einen zweiten Teilnehmer erzeugt und das zeitversetzte Senden der erzeugten Benachrichtigung triggert, wobei der Zeitversatz von dem Benachrichtigungsdienst ermittelt wird.

In einer Ausgestaltung der Erfindung wird die Benachrichtigung an den zumindest einen zweiten Teilnehmer gesendet, wenn der zweite Teilnehmer an den Telekommunikationsdienst angemeldet ist. Es kann auch vorgesehen sein, dass an den zweiten Teilnehmer keine Benachrichtigung gesendet wird, wenn der Teilnehmer nicht an dem Telekommunikationsdienst angemeldet ist. Es kann vorgesehen sein, dem zweiten Teilnehmer auch dann keine Benachrichtigung zu senden, nachdem sich dieser zweite Teilnehmer an dem Telekommunikationsdienst angemeldet hat. Damit wird eine noch bessere Dekorrelation erreicht, d.h., das Zuordnen einer Benachrichtigung zu einer entgegengenommenen Nachricht kann noch weiter erschwert werden.

Die Benachrichtigung kann Daten umfassen, die angepasst sind, an dem zweiten Teilnehmer ein akustisches und/oder visuelles Signal auszugeben, das das Vorliegen der Nachricht bei dem Telekommunikationsdienst signalisiert.

Die Benachrichtigung kann von jedem Teilnehmer identisch sein. In einer Ausgestaltung der Erfindung kann die Benachrichtigung unverschlüsselt gesendet werden. Weil die Benachrichtigung für jeden Teilnehmer identisch ist, kann sie auch unverschlüsselt gesendet werden, weil aus der Benachrichtigung keinerlei personenbezogenen Daten abgeleitet werden können. Das unverschlüsselte Versenden der Benachrichtigung hat zudem den Vorteil, dass auf Seiten des Telekommunikationsdienstes keine Verschlüsselung durchgeführt werden muss, was einen zusätzlichen Rechenaufwand bedeuten würde. Der Telekommunikationsdienst bzw. der Benachrichtigungsdienst, der die Benachrichtigung erzeugt und zeitversetzt sendet, kann so erheblich performanter und ressourcenschonender ausgeführt werden.

In einer Ausgestaltung der Erfindung kann die Nachricht auf Anforderung durch den zweiten Teilnehmer von dem Telekommunikationsdienst an den zweiten Teilnehmer übertragen werden. Weil die Benachrichtigung zeitversetzt zur Entgegennahme der Nachricht von dem ersten Teilnehmer an den zweiten Teilnehmer gesendet wird, kann auch aufgrund der Anforderung durch den zweiten Teilnehmer die Nachricht an den zweiten Teilnehmer zu übertragen keine Information darüber abgeleitet werden, dass der erste Teilnehmer mit dem zweiten Teilnehmer kommuniziert.

Das erfindungsgemäße Verfahren zudem hat den Vorteil, dass die Kausalität zwischen den eingehenden Nachrichten und den zu versendeten Benachrichtigungen aufgehoben wird, was ein Ableiten der Information wer mit wem kommuniziert unmöglich macht.

Die Übertragung der Nachricht von dem ersten Teilnehmer zu dem zweiten Teilnehmer (über den Telekommunikationsdienst) kann auf Basis einer Ende-zu-Ende-Verschlüsselung erfolgen, d.h., die Nachricht wird von dem ersten Teilnehmer verschlüsselt und von dem zweiten Teilnehmer entschlüsselt.

Die Nachricht kann homomorph verschlüsselt werden.

Des Weiteren wird durch die Erfindung ein System zur Sicherung von Telekommunikationsverkehrsdaten, die bei einer Nutzung zumindest eines Telekommunikationsdienstes von einer Anzahl von Teilnehmern bei den Telekommunikationsdienstleister des Telekommunikationsdienstes anfallen, bereitgestellt, wobei der Telekommunikationsdienst angepasst ist, eine Nachricht, die für einen zweiten Teilnehmer bestimmt ist, von zumindest einem ersten Teilnehmer entgegenzunehmen und in Reaktion auf die Entgegennahme der Nachricht eine Benachrichtigung an den zumindest einen zweiten Teilnehmer zu senden, wobei zwischen der Entgegennahme der Nachricht und dem Senden der Benachrichtigung ein vorbestimmter Zeitversatz vorgesehen ist, wobei der Telekommunikationsdienst angepasst ist den Zeitversatz zwischen der Entgegennahme der Nachricht und dem Senden der Benachrichtigung in Abhängigkeit vom Datenverkehr pro Zeiteinheit zwischen den Teilnehmern und dem Telekommunikationsdienst zu wählen, den Zeitversatz zufällig aus einem Zeitversatzintervall auszuwählen, und die Intervallgrenzen des Zeitversatzintervalls in Abhängigkeit vom Datenverkehr pro Zeiteinheit zwischen den Teilnehmern und dem Telekommunikationsdienst zu wählen.

Es hat sich als vorteilhaft herausgestellt, wenn das System eine gesicherte Umgebung umfasst, in der der Telekommunikationsdienst ausführbar ist.

Der Telekommunikationsdienst kann einen Benachrichtigungsdienst umfassen, der angepasst ist, die Benachrichtigung an den zumindest einen zweiten Teilnehmer zu erzeugen und das zeitversetzte Senden der erzeugten Benachrichtigung zu triggern, wobei der Zeitversatz von dem Benachrichtigungsdienst ermittelt wird.

Ferner kann das erfindungsgemäße System weiter angepasst sein, ein erfindungsgemäßes Verfahren auszuführen.

### Kurzbeschreibung der Erfindung

Einzelheiten und Merkmale der Erfindung sowie konkrete Ausführungsbeispiele der Erfindung ergeben sich aus der nachfolgenden Beschreibung in Verbindung mit der Zeichnung. Es zeigt:
- Fig. 1: ein erfindungsgemäßes System zur Sicherung von Telekommunikationsverkehrsdaten zur Erläuterung des erfindungsgemäßen Verfahrens zur Sicherung der Telekommunikationsverkehrsdaten;
- Fig. 2: den zeitlichen Ablauf zwischen dem Empfang einer Nachricht und dem Senden einer Benachrichtigung; und
- Fig. 3: zwei Varianten für die erfindungsgemäße Auswahl eines Zeitversatzes in Abhängigkeit vom Datenverkehr.

### Detaillierte Beschreibung der Erfindung

Mi dem erfindungsgemäßen System und dem erfindungsgemäßen Verfahren werden sowohl ein adäquater Datenschutz als auch hinreichend gute Möglichkeiten zur Datenauswertung, etwa zu Ermittlungszwecken, ermöglicht. Ein Missbrauch der gespeicherten Daten, insbesondere der Telekommunikationsverkehrsdaten wird effektiv vermieden, wobei insbesondere aus dem Datenverkehr keine Information abgeleitet werden kann, wer mit wem kommuniziert.

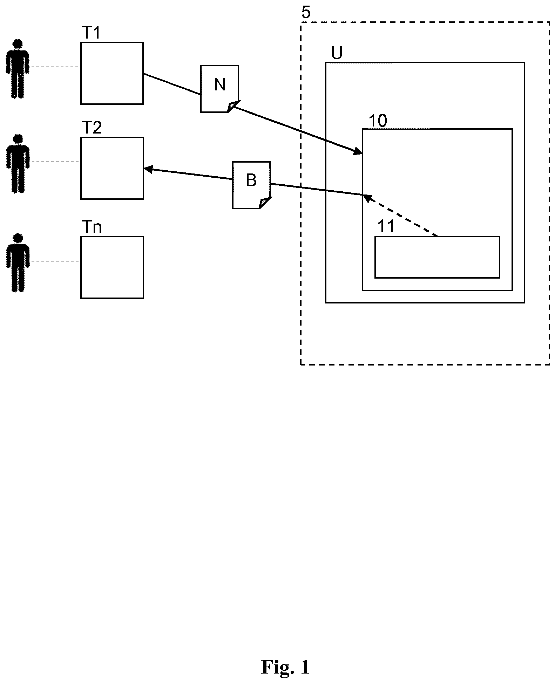

**Fig. 1** zeigt ein erfindungsgemäßes System zur Sicherung von Telekommunikationsverkehrsdaten, die bei einer Nutzung eines Telekommunikationsdienstes 10 von einer Anzahl von Teilnehmern T1 bis Tn anfallen.

Ein Telekommunikationsdienstleister 5 stellt einen Telekommunikationsdienst 10 bereit, der in einer gesicherten Umgebung U ausgeführt wird. Durch den Telekommunikationsdienst 10 kann beispielsweise eine Nachrichtenbox bereitgestellt werden, in die für die Nachrichtenbox zugelassene Teilnehmer Nachrichten für andere Teilnehmer hinterlegen können. Eine Nachricht kann beispielsweise direkt in der Nachrichtenbox erzeugt werden oder über ein Kommunikationsnetzwerk in der Nachrichtenbox abgelegt werden. Eine Nachricht kann hier beispielsweise ein elektronisches Dokument oder dergleichen sein.

Bei dem in Fig. 1 gezeigten Beispiel wird eine Nachricht N, etwa ein elektronisches Dokument von einem ersten Teilnehmer T1 an den Telekommunikationsdienst 10 übertragen und dort beispielsweise in einer entsprechenden Nachrichtenbox abgelegt. Nach Erhalt der Nachricht N erzeugt der Telekommunikationsdienst 10 in der gesicherten Umgebung U eine Benachrichtigung B und sendet diese über ein Kommunikationsnetzwerk an den zweiten Teilnehmer T2. Mit der Benachrichtigung B wird der zweite Teilnehmer T2 darüber informiert, dass der erste Teilnehmer T1 eine Nachricht N für ihn in der Nachrichtenbox des Telekommunikationsdienstes 10 hinterlegt hat.

In einer Ausgestaltung der Erfindung umfasst der Telekommunikationsdienst 10 einen Benachrichtigungsdienst 11, der für das Erzeugen der Benachrichtigung an den zweiten Teilnehmer T2 und für das Senden der Benachrichtigung zuständig ist.

Sämtliche bei dem Telekommunikationsdienstleister 5 anfallenden Daten, d.h. Verkehrsdaten und Nutzdaten werden in der gesicherten Umgebung U gespeichert und gegebenenfalls verarbeitet. Wie Eingangs erläutert, können sowohl die Nutzdaten als auch die Verkehrsdaten verschlüsselt, vorzugsweise doppelt verschlüsselt in der gesicherten Umgebung U gespeichert werden. Durch die doppelte Verschlüsselung ist gewährleistet, dass der Telekommunikationsdienstleister 5 keinen Zugriff auf die Nutz- und Verkehrsdaten erhält. Das Verschlüsseln bzw. doppelte Verschlüsseln der Daten wird vorzugsweise innerhalb der gesicherten Umgebung U durchgeführt, wobei auch die hierfür benötigten Schlüssel in der gesicherten Umgebung U erzeugt, gespeichert und verwaltet werden. Die gesicherte Umgebung U wird auch als versiegelte Infrastruktur bezeichnet und verhindert, dass weder der Betreiber der Infrastruktur noch der Telekommunikationsdienstanbieter bzw. Telekommunikationsdienstleister 5 während der Verarbeitung der Daten auf diese zugreifen kann.

Hierzu kann die gesicherte Umgebung U eine in Fig. 1 nicht gezeigte Einrichtung zum Erzeugen der benötigten kryptographischen Schlüssel umfassen. Um zu verhindern, dass die von dem Telekommunikationsdienstleister 5 in der gesicherten Umgebung U verschlüsselten Verbindungsdaten bzw. Nutzdaten ohne Weiteres von diesem mit Hilfe der entsprechenden Entschlüsselungs-Schlüssel wieder entschlüsselt werden können, ist es vorteilhaft, die verschlüsselten Daten mit einem weiteren Verschlüsselungsschlüssel nochmals zu verschlüsseln und die so doppelt verschlüsselten Daten in einer Speichereinrichtung der gesicherten Umgebung U abzulegen. Der zweite Verschlüsselungsschlüssel kann einer vertrauenswürdigen Instanz, etwa einem Notar, übergeben werden, der diesen nur auf eine richterliche Anordnung hin herausgeben kann.

Die gesicherte Umgebung U bzw. die versiegelte Infrastruktur kann eine Anzahl redundanter und verteilter Rechnerressourcen umfassen, welche jeweils eine Anzahl sogenannter Trusted Plattform Module (TPM), Leistungsschalter zur Unterbrechung der Stromversorgung der gesamten Rechnerressourcen, elektronmechanische Schlösser, eine Anzahl von Sensoren, mit denen der Zugang zu den Rechnerressourcen überwacht werden kann, umfassen können. In einer Ausgestaltung der Erfindung können die Rechnerressourcen Speichereinrichtungen aufweisen, in denen die kryptographischen Schlüssel gespeichert werden, wobei in einer Ausgestaltung der Erfindung die kryptographischen Schlüssel ausschließlich in flüchtigen Speichermedien gespeichert werden, sodass nach einer Unterbrechung der Stromversorgung die gespeicherten Schlüssel gelöscht werden. Das Löschen der kryptographischen Schlüssel kann etwa dann erforderlich sein, wenn sich jemand unbefugt Zutritt bzw. Zugang zu einer Rechnerressource verschafft. Damit die Schlüssel wieder hergestellt werden können, ist es vorteilhaft, wenn die kryptographischen Schlüssel über eine Synchronisationseinrichtung mit einer weiteren Speichereinrichtung zum Speichern kryptographischer Schlüssel synchronisiert werden.

Die Rechnerressourcen können mit einer sogenannten Versiegelungsüberwachungseinrichtung (Sealing Control) verbunden sein, welche die elektromechanischen Komponenten überwacht. Stellt die Versiegelungsüberwachungseinrichtung einen unbefugten Zugang zu einer Rechnerressource fest, kann sie die sofortige Synchronisierung sämtlicher in der Rechnerressource gespeicherten Schlüssel veranlassen und nach Beendigung der Synchronisation die Stromversorgung zu der kompromittierten Rechnerressource unterbrechen. Damit ist gewährleistet, dass sich aus einer kompromittierten Rechnerressource keine Entschlüsselungsschlüssel mehr herstellen lassen können.

Die Rechnerressourcen können ferner mit einer sogenannten Cloud Control gekoppelt sein, die vorgesehen sein kann, den Datenaustausch mit einem oder mehreren Teilnehmer T abzuwickeln. Die Cloud Control kann ebenfalls mit der Versiegelungsüberwachungseinrichtung gekoppelt sein, sodass die Versiegelungsüberwachungseinrichtung auch bei einem festgestellten Einbruch über ein Kommunikationsnetzwerk entsprechende Maßnahmen einleiten kann.

Die Teilnehmer T1 bis Tn des Telekommunikationsdienstes 10 können Smartphones, Tablet-PCs, herkömmliche Computer oder dergleichen sein, wobei in dem in Fig. 1 gezeigten Beispiel ein Teilnehmer jeweils einem Nutzer zugeordnet ist. Wie aus Fig. 1 ersichtlich ist, wird zwischen den Teilnehmern T1 und T2 und dem Telekommunikationsdienst 10 eine Datenübertragung abgewickelt, wobei Daten von dem ersten Teilnehmer T1 an den Telekommunikationsdienst 10 und Daten von dem Telekommunikationsdienst 10 an den zweiten Teilnehmer T2 übertragen werden, d.h. dass Daten von außerhalb der gesicherten Umgebung U zu dem Telekommunikationsdienst 10 gelangen bzw. Daten von dem Telekommunikationsdienst 10 aus der gesicherten Umgebung U heraus zu einem zweiten Teilnehmer T2 gelangen.

Auch wenn die Datenübertragung zwischen den beiden Teilnehmern T1, T2 und dem Telekommunikationsdienst 10 verschlüsselt abgewickelt wird, erhält der Telekommunikationsdienstleister 5 die Information, dass die Teilnehmer T1 und T2 an einer (gemeinsamen) Kommunikation beteiligt sind. Um zu verhindern, dass der Telekommunikationsdienstleister alleine aufgrund des Datenverkehrs (ohne hierfür den Inhalt der gesendeten bzw. empfangenen Daten kennen zu müssen) die Information erhält, dass der erste Teilnehmer T1 mit dem zweiten Teilnehmer T2 kommuniziert, ist es erfindungsgemäß vorgesehen, dass die Benachrichtigung B von dem Telekommunikationsdienst 10 bzw. von dem Benachrichtigungsdienst 11 erzeugt wird und zeitversetzt an den zweiten Teilnehmer T2 gesendet bzw. übertragen wird. Durch das zeitversetzte Senden der Benachrichtigung B wird erreicht, dass der Telekommunikationsdienstleister 5 anhand des Datenverkehrs keinerlei Zuordnung zwischen der empfangenen Nachricht N und der gesendeten Benachrichtigung B vornehmen kann und daher aus den Verkehrsdaten auch die Information, dass der Teilnehmer T1 mit dem Teilnehmer T2 kommuniziert, nicht ableiten kann. Durch das Vorsehen eines Zeitversatzes zwischen der Entgegennahme der Nachricht N und dem Senden der Benachrichtigung B werden diese von außerhalb der gesicherten Umgebung U zugänglichen Verkehrsdaten "verschleiert", sodass weder für den Telekommunikationsdienstleister 5 noch für einen unberechtigten Dritten erkennbar ist, wer mit wem und wie häufig kommuniziert.

In einer Ausgestaltung der Erfindung kann auch die Benachrichtigung B verschlüsselt werden bzw. verschlüsselt übertragen werden. Dies ist insbesondere dann vorteilhaft, wenn dem Empfänger der Nachricht N mit der Bestätigungsnachricht B mitgeteilt werden soll, wer die Nachricht N für ihn beispielsweise in einer Nachrichtenbox hinterlegt hat oder um welchen Inhalt es sich bei der in der Nachrichtenbox hinterlegten Nachricht handelt.

Als besonders vorteilhaft hat es sich jedoch herausgestellt, wenn mit der Benachrichtigung B lediglich die Information an den Empfänger bzw. an den zweiten Teilnehmer T2 übertragen wird, dass eine Nachricht für ihn bei dem Telekommunikationsdienstleister 5 hinterlegt wurde. Wenn mit der Benachrichtigung B nur die Information übertragen wird, dass eine Nachricht hinterlegt wurde, kann die Benachrichtigung B für sämtliche Teilnehmer des Telekommunikationsdienstes identisch sein, sodass auf eine Verschlüsselung bzw. auf eine verschlüsselte Übertragung der Benachrichtigung B verzichtet werden kann. Damit kann die Last des Systems auf Seiten des Telekommunikationsdienstleisters für das Erzeugen und Versenden der Benachrichtigungen erheblich reduziert bzw. minimiert werden.

In einer Ausgestaltung der Erfindung ist es ausreichend, wenn die Nutzdaten der Benachrichtigung B lediglich eine Länge von einem Bit aufweisen, denn zum Zwecke der Signalisierung des zweiten Teilnehmers T2, dass irgendeine Nachricht für ihn beim Telekommunikationsdienstleister hinterlegt wurde, ist ein Bit ausreichend. Damit kann das Datenvolumen für die Übertragung der Benachrichtigungen B an die Teilnehmer des Telekommunikationsdienstes reduziert bzw. minimiert werden.

Nach Erhalt der Benachrichtigung B kann der zweite Teilnehmer T2 die für ihn bestimmte Nachricht N von dem Telekommunikationsdienstleister anfordern. Die Kommunikation zwischen dem ersten Teilnehmer T1 und dem zweiten Teilnehmer T2 kann dabei auf Basis einer Ende-zu-Ende-Verschlüsselung erfolgen, d.h., der erste Teilnehmer verschlüsselt die Nachricht und der zweite Teilnehmer entschlüsselt die Nachricht N. Zum Verschlüsseln der Nachricht kann ein homomorphes Verschlüsselungsverfahren verwendet werden. Dadurch kann z.B. der Telekommunikationsdienst Operation auf der Nachricht durchführen, ohne die Nachricht selbst entschlüsseln zu müssen. Das Ergebnis der Operation liegt dann ebenfalls in verschlüsselter Form vor.

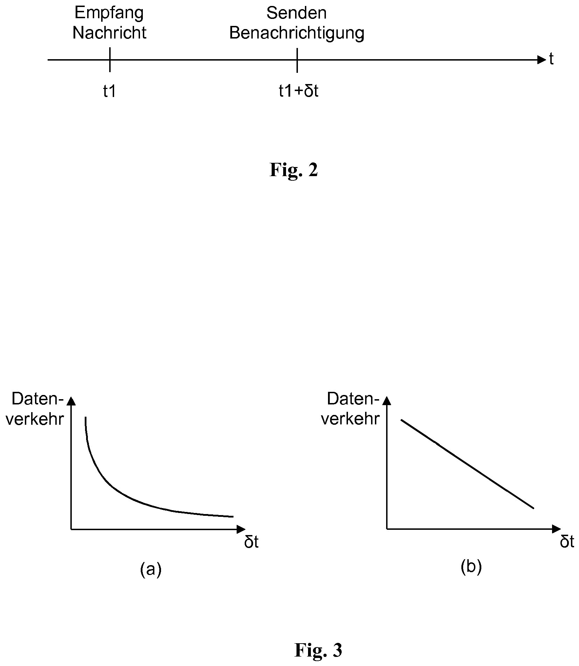

**Fig. 2** zeigt den zeitlichen Verlauf des Empfangs einer Nachricht und des Sendens einer Benachrichtigung.

Zum Zeitpunkt t1 empfängt der Telekommunikationsdienst des Telekommunikationsdienstleisters eine Nachricht von einem ersten Teilnehmer. Nach dem Empfang der Nachricht erzeugt der Telekommunikationsdienst bzw. der Benachrichtigungsdienst eine Benachrichtigung für den Teilnehmer, für den die empfangene Nachricht bestimmt ist, und sendet die Benachrichtigung an diesen Teilnehmer, wobei zwischen der Entgegennahme der Nachricht zum Zeitpunkt t1 und dem Senden der Benachrichtigung ein vorbestimmter Zeitversatz δt vorgesehen wird. D.h., die Benachrichtigung wird zum Zeitpunkt t1 + δt an den zweiten Teilnehmer gesendet.

Im einfachsten Fall der Erfindung kann ein konstanter Zeitversatz δt für alle zu versendenden Benachrichtigungen verwendet werden. Ein solcher konstanter Zeitversatz hat allerdings den Nachteil, dass dieser gegebenenfalls anhand einer Analyse des Datenverkehrs zwischen den Teilnehmern und dem Telekommunikationsdienst ermittelt werden kann, sodass bei Kenntnis des Zeitversatzes δt wieder eine Zuordnung einer Benachrichtigung B zu einer empfangenen Nachricht N möglich wird. Um dies zu verhindern, kann es erfindungsgemäß vorgesehen sein, einen dynamischen Zeitversatz vorzusehen, der sich nach einer bestimmten Anzahl von Benachrichtigungen - im besten Fall nach jeder Benachrichtigung - ändert. Damit wird das Ermitteln eines Zeitversatzes durch Analyse des Datenverkehrs einerseits erheblich erschwert und andererseits kann ein ermittelter Zeitversatz lediglich für einige in der Vergangenheit versendete Benachrichtigungen herangezogen werden, um die Benachrichtigungen korrekt den jeweiligen empfangenen Benachrichtigungen zuordnen zu können, wohingegen ein so ermittelter Zeitversatz für eine derartige Zuordnung von Benachrichtigungen zu Nachrichten für zukünftig verschickte Benachrichtigungen bzw. empfangenen Nachrichten wertlos ist, weil sich der aktuelle Zeitversatz bis dahin bereits geändert hat.

Eine solche Dynamik des Zeitversatzes δt lässt sich beispielsweise dadurch erreichen, indem der Zeitversatz δt in Abhängigkeit vom Datenverkehr pro Zeiteinheit zwischen den Teilnehmern und dem Telekommunikationsdienst gewählt wird.

Beispiele für die Auswahl eines Zeitversatzes δt in Abhängigkeit vom Datenverkehr pro Zeiteinheit sind in Fig. 3 gezeigt.

Bei den in **Fig. 3** gezeigten Beispielen ist der Zeitversatz bei einem hohen Datenverkehr pro Zeiteinheit kleiner als bei einem geringen Datenverkehr pro Zeiteinheit d.h., dass bei einem hohen Datenverkehr ein geringerer Zeitversatz δt gewählt werden kann, als bei einem geringeren Datenverkehr, denn ein hoher Datenverkehr geht in der Regel mit einer großen Anzahl von Nachrichten einer großen Anzahl von Teilnehmern einher, sodass bereits aufgrund der großen Anzahl von versendenden Benachrichtigungen eine Zuordnung einer versendeten Benachrichtigung zu einer empfangenen Nachricht erschwert wird.

Bei dem in Fig. 3a gezeigten Beispiel ist der Zeitversatz δt nicht linear von dem Datenverkehr abhängig, während bei dem in Fig. 3b gezeigten Beispiel der Zeitversatz δt linear von dem Datenverkehr abhängig ist. Selbstverständlich können auch andere als die in Fig. 3a und Fig. 3b gezeigten Abhängigkeiten zwischen dem Zeitversatz δt und dem Datenverkehr gewählt werden.

In einer Ausgestaltung der Erfindung kann der Datenverkehr pro Zeiteinheit die Anzahl der entgegengenommenen Nachrichten N pro Zeiteinheit umfassen.

Um eine noch bessere Dynamik des ausgewählten Zeitversatzes δt zu erreichen, kann es vorgesehen sein, wenn der für das Versenden einer Benachrichtigung benötigte Zeitversatz δt zufällig aus einem Zeitversatzintervall ausgewählt wird. Hierbei kann der Zeitversatz δt für eine bestimmte Anzahl von zu versendenden Benachrichtigungen aus dem Zeitversatzintervall ausgewählt werden. Alternativ kann der Zeitversatz δt für jede einzelne zu versendende Benachrichtigung zufällig aus dem Zeitversatzintervall ausgewählt werden. Damit wird erreicht, dass selbst bei einer umfassenden Analyse des Datenverkehrs zwischen den Teilnehmern und dem Telekommunikationsdienst keinerlei Rückschlüsse über die Zuordnung der Benachrichtigungen zu den empfangenen Nachrichten möglich ist, weil einerseits jeder Zeitversatz einer bestimmten Zufälligkeit unterliegt und weil andererseits aufgrund der zufälligen Auswahl der Zeitversätze für die zu versendenden Benachrichtigungen die Reihenfolge der versendeten Benachrichtigungen nicht mehr der Reihenfolge der eingegangenen Nachrichten entspricht.

Die Zufallskomponente bei der zufälligen Auswahl des Zeitversatzes aus einem Zeitversatzintervall kann noch weiter verbessert werden, indem die Intervallgrenzen des Zeitversatzintervalls in Abhängigkeit vom Datenverkehr pro Zeiteinheit zwischen den Teilnehmern und dem Telekommunikationsdienst gewählt werden. Dadurch wird gewährleistet, dass bei einem großen Datenverkehr kleine Zeitversätze δt zufällig aus dem Zeitversatzintervall ausgewählt werden und bei einem geringen Datenverkehr größere Zeitversätze δt aus dem Zeitversatzintervall ausgewählt werden.

In einer Ausgestaltung der Erfindung können zusätzlich bzw. alternativ zu den vorstehend genannten Maßnahmen für die Auswahl eines Zeitversatzes die erzeugten Benachrichtigungen zufällig in eine Benachrichtigungswarteschlange eingereiht werden, sodass die Reihenfolge der zu versendenden Benachrichtigungen nicht mehr der Reihenfolge der empfangenen Nachrichten entspricht. Bei Verwendung einer solchen Warteschlange, in der die zu versendenden Benachrichtigungen zufällig eingereiht werden, kann auf die zufällige Auswahl eines Zeitversatzes aus einem Zeitversatzintervall auch verzichtet werden, denn aufgrund der zufälligen Einreihung der Benachrichtigungen in die Warteschlange ist auch bei einem konstanten Zeitversatz gewährleistet, dass eine gesendete Benachrichtigung nicht korrekt einer empfangenen Nachricht zugeordnet werden kann.

### Bezugszeichen:

- 5: Telekommunikationsdienstleister
- 10: Telekommunikationsdienst
- 11: Benachrichtigungsdienst
- δt: Zeitversatz zwischen Datenempfang und Senden der Benachrichtigung
- B: Benachrichtigung zwischen Telekommunikationsdienst und Teilnehmer
- D: Daten der Benachrichtigung
- N: Nachricht zwischen Teilnehmer und Telekommunikationsdienst
- T: Teilnehmer
- T1: erster Teilnehmer
- T2: zweiter Teilnehmer
- U: gesicherte Umgebung

## Patentansprüche

1. Verfahren zur Sicherung von Telekommunikationsverkehrsdaten, die bei einer Nutzung zumindest eines Telekommunikationsdienstes (10) von einer Anzahl von Teilnehmern (T) bei dem Telekommunikationsdienstleister (5) des Telekommunikationsdienstes anfallen, wobei
- der Telekommunikationsdienst zumindest eine Nachricht (N) zumindest eines ersten Teilnehmers (T1) des Telekommunikationsdienstes entgegennimmt, die für zumindest einen zweiten Teilnehmer (T2) des Telekommunikationsdienstes bestimmt ist, und
- der Telekommunikationsdienst in Reaktion auf die Entgegennahme der Nachricht (N) eine Benachrichtigung (B) erzeugt und an den zumindest einen zweiten Teilnehmer sendet, wobei mit der Benachrichtigung (B) der zweite Teilnehmer (T2) darüber informiert wird, dass der erste Teilnehmer (T1) die Nachricht (N) für ihn beim Telekommunikationsdienstleister (5) hinterlegt hat, wobei zwischen der Entgegennahme jeder Nachricht (N) und dem Senden der entsprechenden Benachrichtigung (B) jeweils ein Zeitversatz (δt) vorgesehen wird, wobei der Zeitversatz (δt) zwischen der Entgegennahme der Nachricht (N) und dem Senden der Benachrichtigung (B) in Abhängigkeit vom Datenverkehr pro Zeiteinheit zwischen den Teilnehmern (T) und dem Telekommunikationsdienst gewählt wird,
**dadurch gekennzeichnet, dass**
- der Zeitversatz (δt) zufällig aus einem Zeitversatzintervall ausgewählt wird, und
- die Intervallgrenzen des Zeitversatzintervalls in Abhängigkeit vom Datenverkehr pro Zeiteinheit zwischen den Teilnehmern (T) und dem Telekommunikationsdienst gewählt werden.

2. Verfahren nach Anspruch 1, wobei der Zeitversatz (δt) bei einem hohen Datenverkehr pro Zeiteinheit kleiner ist als bei einem geringen Datenverkehr pro Zeiteinheit.

3. Verfahren nach einem der vorhergehenden Ansprüche, wobei der Zeitversatz (δt) für jeweils eine vorbestimmte Anzahl von Benachrichtigungen oder für jede Benachrichtigung verschieden gewählt wird.

4. Verfahren nach einem der vorhergehenden Ansprüche, wobei der Datenverkehr pro Zeiteinheit die Anzahl der entgegengenommenen Nachrichten (N) pro Zeiteinheit umfasst.

5. Verfahren nach einem der vorhergehenden Ansprüche, wobei der Telekommunikationsdienst (10) einen Benachrichtigungsdienst (11) umfasst, der die Benachrichtigung (B) an den zumindest einen zweiten Teilnehmer (T2) erzeugt und das zeitversetzte Senden der erzeugten Benachrichtigung triggert, wobei der Zeitversatz (δt) von dem Benachrichtigungsdienst ermittelt wird und wobei der Telekommunikationsdienst in einer gesicherten Umgebung (U) ausgeführt wird.

6. Verfahren nach einem der vorhergehenden Ansprüche, wobei die Benachrichtigung (B) Daten (D) umfasst, die angepasst sind, an dem zweiten Teilnehmer (T2) ein akustisches und/oder visuelles Signal auszugeben, das das Vorliegen der Nachricht (N) signalisiert.

7. Verfahren nach einem der vorhergehenden Ansprüche, wobei die Benachrichtigung (B) für jeden Teilnehmer (T) identisch ist.

8. Verfahren nach einem der vorhergehenden Ansprüche, wobei die Benachrichtigung (B) unverschlüsselt gesendet wird.

9. Verfahren nach einem der vorhergehenden Ansprüche, wobei die Nachricht (N) auf Anforderung durch den zweiten Teilnehmer (T2) von dem Telekommunikationsdienst (10) an den zweiten Teilnehmer übertragen wird.

10. Verfahren nach einem der vorhergehenden Ansprüche, wobei die Übertragung der Nachricht (N) von dem ersten Teilnehmer (T1) zu dem zweiten Teilnehmer (T2) auf Basis einer Ende-zu-Ende-Verschlüsselung erfolgt, wobei die Nachricht vorzugsweise homomorph verschlüsselt wird.

11. System zur Sicherung von Telekommunikationsverkehrsdaten, die bei einer Nutzung zumindest eines Telekommunikationsdienstes (10) von einer Anzahl von Teilnehmern (T) bei dem Telekommunikationsdienstleister (5) des Telekommunikationsdienstes anfallen, wobei der Telekommunikationsdienst angepasst ist eine Nachricht (N), die für einen zweiten Teilnehmer (T2) bestimmt ist, von zumindest einem ersten Teilnehmer (T1) entgegenzunehmen und in Reaktion auf die Entgegennahme der Nachricht (N) eine Benachrichtigung (B) zu erzeugen und an den zumindest einen zweiten Teilnehmer zu senden, wobei mit der Benachrichtigung (B) der zweite Teilnehmer (T2) darüber informiert wird, dass der erste Teilnehmer (T1) die Nachricht (N) für ihn beim Telekommunikationsdienstleister (5) hinterlegt hat, wobei zwischen der Entgegennahme der Nachricht und dem Senden der Benachrichtigung ein vorbestimmter Zeitversatz (δt) vorgesehen ist, wobei der Telekommunikationsdienst angepasst ist den Zeitversatz (δt) zwischen der Entgegennahme der Nachricht (N) und dem Senden der Benachrichtigung (B) in Abhängigkeit vom Datenverkehr pro Zeiteinheit zwischen den Teilnehmern (T) und dem Telekommunikationsdienst zu wählen,
**dadurch gekennzeichnet, dass**
der Telekommunikationsdienst weiter angepasst ist
- den Zeitversatz (δt) zufällig aus einem Zeitversatzintervall auszuwählen, und
- die Intervallgrenzen des Zeitversatzintervalls in Abhängigkeit vom Datenverkehr pro Zeiteinheit zwischen den Teilnehmern (T) und dem Telekommunikationsdienst zu wählen.

12. System nach dem vorhergehenden Anspruch, wobei der Telekommunikationsdienst (10) einen Benachrichtigungsdienst (11) umfasst, der angepasst ist die Benachrichtigung (B) an den zumindest einen zweiten Teilnehmer (T2) zu erzeugen und das zeitversetzte Senden der erzeugten Benachrichtigung zu triggern, wobei der Zeitversatz (δt) von dem Benachrichtigungsdienst ermittelt wird und wobei das System eine gesicherte Umgebung umfasst, in der der Telekommunikationsdienst ausführbar ist,.

## Claims

1. A method for securing telecommunication traffic data which, when at least one telecommunication service (10) is used by a given number of users (T), is present at the telecommunication service provider (5) of said telecommunication service, wherein
- the telecommunication service receives at least one message (N) from at least one first user (T1) of the telecommunication service which is intended for at least one second user (T2) of the telecommunication service, and
- the telecommunication service, in reaction to said reception of the message (N), creates a notification (B) and sends it to the at least one second user, the notification (B) informing the second user (T2) about the fact that the first user (T1) has deposited the message (N) for him at the telecommunication service provider (5), a time delay (δt) being provided between the reception of each message (N) and the transmission of the corresponding notification (B), the time delay (δt) between the reception of the message (N) and the transmission of the notification (B) being selected depending on the data traffic volume per time unit between the users (T) and the telecommunication service,
**characterised in that**
- the time delay (δt) is randomly selected from a given time delay interval, and
- the interval limits of the time delay interval are selected depending on the data traffic volume per time unit between the users (T) and the telecommunication service.

2. The method as claimed in claim 1, wherein the time delay (δt) is smaller at a high data traffic volume per time unit than at a low data traffic volume per time unit.

3. The method as claimed in any of the preceding claims, wherein the time delay (δt) is selected so as to be different for a predetermined number of notifications or for each notification.

4. The method as claimed in any of the preceding claims, wherein the data traffic volume per time unit comprises the number of received messages (N) per time unit.

5. The method as claimed in any of the preceding claims, wherein the telecommunication service (10) comprises a notification service (11) which generates the notification (B) to be sent to the at least one second user (T2) and triggers the time-delayed transmission of the generated notification, the time delay (δt) being determined by the notification service and the telecommunication service being executed in a secured environment (U).

6. The method as claimed in any of the preceding claims, wherein the notification (B) comprises data (D) adapted to output an acoustic and/or visual signal to the user (T2) indicating the presence of the message (N).

7. The method as claimed in any of the preceding claims, wherein the notification (B) is identical for each user (T).

8. The method as claimed in any of the preceding claims, wherein die notification (B) is transmitted in an unencrypted manner.

9. The method as claimed in any of the preceding claims, wherein the message (N) is transmitted to the second user by the telecommunication service (10) when requested by said second user (T2).

10. The method as claimed in any of the preceding claims, wherein the transmission of the message (N) from the first user (T1) to the second user (T2) is performed on the basis of an end-to-end encryption, the message being preferably encrypted in a homomorphic manner.

11. A system for securing telecommunication traffic data, which, when at least one telecommunication service (10) is used by a given number of users (T), is present at the telecommunication service provider (5) of said telecommunication service, the telecommunication service being adapted to receive a message (N) intended for a second user (T2) from at least one first user (T1), and, in reaction to the reception of the message (N), to create a notification (B) and send it to the at least one second user, the notification (B) informing the second user (T2) about the fact that the first user (T1) has deposited the message (N) for him at the telecommunication service provider (5), a predetermined time delay (δt) being provided between the reception of the message (N) and the transmission of the notification (B), the telecommunication service being adapted to select the time delay (δt) between the reception of the message (N) and the transmission of the notification (B) depending on the data traffic volume per time unit between the users (T) and the telecommunication service,
**characterised in that**
the telecommunication service is further adapted
- to randomly select the time delay (δt) from a given time delay interval, and
- to select the interval limits of the time delay interval depending on the data traffic volume per time unit between the users (T) and the telecommunication service.

12. The system as claimed in the preceding claim, wherein the telecommunication service (10) comprises a notification service (11) which is adapted to generate the notification (B) to be sent to the at least one second user (T2) and to trigger the time-delayed transmission of the generated notification, the time delay (δt) being determined by the notification service and the system comprising a secured environment in which the telecommunication service may be executed.

## Revendications

1. Procédé destiné à sécuriser des données de trafic de télécommunication qui sont présentes lors d'une utilisation d'au moins un service de télécommunication (10) par un nombre donné d'utilisateurs (T) auprès du fournisseur de services de télécommunication (5) du service de télécommunication, lors duquel
- le service de télécommunication reçoit au moins un message (N) d'au moins un premier utilisateur (T1) du service de télécommunication qui est adressé à au moins un deuxième utilisateur (T2) dudit service de télécommunication, et
- le service de télécommunication génère, en réaction à la réception du message (N), une notification (B) et l'envoie audit au moins un deuxième utilisateur, la notification (B) servant à informer le deuxième utilisateur (T2) que le premier utilisateur (T1) a déposé pour celui-ci le message (N) auprès du fournisseur de services de télécommunication (5), un décalage temporel (δt) étant prévu respectivement entre la réception de chaque message (N) et l'envoi de la notification correspondante (B), le décalage temporel (δt) qui existe entre la réception du message (N) et l'envoi de la notification (B) étant choisi en fonction du trafic de données par unité de temps entre les utilisateurs (T) et le service de télécommunication,
**caractérisé en ce que**
- le décalage temporel (δt) est choisi de manière aléatoire à partir d'un intervalle de décalage temporel, et
- les limites d'intervalle de l'intervalle de décalage temporel sont choisies en fonction du trafic de données par unité de temps entre les utilisateurs (T) et le service de télécommunication.

2. Procédé selon la revendication 1, lors duquel le décalage temporel (δt) est plus petit lors d'un trafic de données élevé par unité de temps que lors d'un trafic de données faible.

3. Procédé selon l'une quelconque des revendications précédentes, lors duquel le décalage temporel (δt) est choisi de manière à être différent pour respectivement un nombre prédéterminé de notifications ou pour chaque notification.

4. Procédé selon l'une quelconque des revendications précédentes, lors duquel le trafic de données par unité de temps comprend le nombre de messages (N) reçus par unité de temps.

5. Procédé selon l'une quelconque des revendications précédentes, lors duquel le service de télécommunication (10) comprend un service de notification (11) qui génère la notification (B) destinée audit au moins un deuxième utilisateur (T2) et déclenche l'envoi décalé dans le temps de la notification ainsi générée, le décalage temporel (δt) étant déterminé par le service de notification et le service de télécommunication étant réalisé dans un environnement sécurisé (U).

6. Procédé selon l'une quelconque des revendications précédentes, lors duquel la notification (B) comprend des données (D) qui sont conçues pour émettre, à l'intention du deuxième utilisateur (T2), un signal acoustique et/ou visuel qui signale la présence du message (N).

7. Procédé selon l'une quelconque des revendications précédentes, lors duquel la notification (B) est identique pour chaque utilisateur (T).

8. Procédé selon l'une quelconque des revendications précédentes, lors duquel la notification (B) est envoyée de manière non chiffrée.

9. Procédé selon l'une quelconque des revendications précédentes, lors duquel le message (N) est transmis au deuxième utilisateur par le service de télécommunication (10) à la demande du deuxième utilisateur (T2).

10. Procédé selon l'une quelconque des revendications précédentes, lors duquel la transmission du message (N) du premier utilisateur (T1) vers le deuxième utilisateur (T2) s'effectue sur la base d'un chiffrement de bout en bout, le message étant chiffré de préférence de manière homomorphe.

11. Système destiné à sécuriser des données de trafic de télécommunication qui sont présentes lors d'une utilisation d'au moins un service de télécommunication (10) par un nombre donné d'utilisateurs (T) auprès du fournisseur de services de télécommunication (5) du service de télécommunication, le service de télécommunication étant conçu pour recevoir un message (Npr) en provenance d'au moins un premier utilisateur (T1) qui est adressé à un deuxième utilisateur (T2) et pour générer, en réaction à la réception dudit message (N), une notification (B) et pour l'envoyer audit au moins un deuxième utilisateur, la notification (B) servant à informer le deuxième utilisateur (T2) que le premier utilisateur (T1) a déposé pour celui-ci le message (N) auprès du fournisseur de services de télécommunication (5), un décalage temporel prédéterminé (δt) étant prévu entre la réception du message et l'envoi de la notification, le service de télécommunication étant conçu pour choisir le décalage temporel (δt) prévu entre la réception du message (N) et l'envoi de la notification (B) en fonction du trafic de données par unité de temps entre les utilisateurs (T) et le service de télécommunication,
**caractérisé en ce que**
le service de télécommunication est conçu en outre pour
- choisir le décalage temporel (δt) de manière aléatoire à partir d'un intervalle de décalage temporel, et
- choisir les limites d'intervalle de l'intervalle de décalage temporel en fonction du trafic de données par unité de temps entre les utilisateurs (T) et le service de télécommunication.

12. Système selon l'une quelconque des revendications précédentes, dans lequel le service de télécommunication (10) comprend un service de notification (11) qui est conçu pour générer la notification (B) à l'intention dudit au moins un deuxième utilisateur (T2) et pour déclencher l'envoi décalé dans le temps de la notification ainsi générée, le décalage temporel (δt) étant déterminé par le service de notification et ledit système comprenant un environnement sécurisé dans lequel le service de télécommunication peut être réalisé.
